# EUROPÄISCHE PATENTSCHRIFT

(11) **EP 2 794 381 B1**
(45) Veröffentlichungstag und Bekanntmachung des Hinweises auf die Patenterteilung: **26.04.2017**
(21) Anmeldenummer: 12816451.4
(22) Anmeldetag: 05.12.2012
(51) Int. Cl.: B60L 5/00, H01H 3/32, H01H 9/02, B61C 17/00

(54) **SCHALTVORRICHTUNG FÜR EIN ELEKTRISCH ANGETRIEBENES FAHRZEUG UND ELEKTROFAHRZEUG**
SWITCHING DEVICE FOR AN ELECTRICALLY DRIVEN VEHICLE, AND ELECTRIC VEHICLE
DISPOSITIF DE COMMUTATION POUR UN VÉHICULE À PROPULSION ÉLECTRIQUE ET VÉHICULE ÉLECTRIQUE

(30) Priorität: 23.12.2011 DE 102011089812
(43) Veröffentlichungstag der Anmeldung: 29.10.2014
(73) Patentinhaber: Siemens Aktiengesellschaft, 80333 München (DE); Richard AG, 4853 Murgenthal (CH)
(72) Erfinder: BAUMANN, Thomas, 97084 Würzburg (DE); HOFER, Dieter, CH-4853 Riken (CH)
(74) Vertreter: Fischer, Uwe
(86) Internationale Anmeldenummer: PCT/DE2012/200081
(87) Internationale Veröffentlichungsnummer: WO 2013/091629

(56) Entgegenhaltungen:
- EP-A1- 2 020 332
- DE-A1-102006 043 632

## Beschreibung

Die Erfindung geht aus von einer Schaltvorrichtung für ein elektrisch angetriebenes Fahrzeug, insbesondere Schienenfahrzeug, mit einer Schalteinheit, die zum Verbinden und zum Trennen einer Fahrzeugsantriebseinheit mit bzw. von einer elektrischen, einer Hochspannung führenden Versorgungsleitung vorgesehen ist und zumindest zwei Schaltkontakte aufweist, einer Antriebseinheit, die zum Antreiben einer relativen Bewegung der Schaltkontakte zueinander vorgesehen ist. Aus der gattungsgemässen DE 10 2006 043 632 A1 ist eine Schaltvorrichtung für den Bahnbetrieb mit einem zwei Schaltkontakte umfassenden Schaltteil und einem Antriebssystem mit einer einen Schaltkontakt bewegenden Schaltstange. Die Schaltvorrichtung ist mit einer Befestigungsgrundplatte am Dach eines Schienenfahrzeugs befestigt. Hierbei ist - in Bezug auf die vertikale Richtung im befestigten Zustand der Schaltvorrichtung - das Antriebssystem in einem Gehäuse angeordnet, welches unterhalb der Befestigungsgrundplatte in einen aus dem Dach ausgesparten Dachdurchbruch hineinragt. Der Schaltteil ist oberhalb der Befestigungsgrundplatte angeordnet und von dieser über eine Luftstrecke beabstandet.
Es ist aus der EP 1 996 427 B1 ferner bekannt, den Schaltteil zusammen mit dem Antriebssystem in einem Gehäuse anzuordnen. Darin wird jedoch lediglich vorgeschlagen, ein bekanntes Schaltsystem in einem von einer Umhausung umschlossenen Raum unterzubringen, wobei das vom Schaltsystem beanspruchte Bauvolumen unverändert ist.
Der Erfindung liegt die Aufgabe zugrunde, eine gattungsgemäße Schaltvorrichtung bereitzustellen, bei welcher eine kompakte Bauweise erreicht werden kann. Bei einer Anordnung der Schaltvorrichtung auf einem Fahrzeugsdachelement soll insbesondere - in Bezug auf die vertikale Richtung - eine möglichst flache Bauart erreicht werden.

Hierzu wird vorgeschlagen, dass eine Gehäuseeinheit zumindest zur Aufnahme der Schalteinheit und der Antriebseinheit vorgesehen ist, wobei die Gehäuseeinheit einen Träger zum Tragen zumindest der Schalteinheit umfasst, und wobei die Schalteinheit relativ zum Träger in liegender Position an diesem angeordnet ist. Hierdurch kann eine besonders kompakte Bauform erreicht werden. Bei einer - relativ zum Boden - horizontalen Ausrichtung des Trägers kann durch die liegende Position der Schalteinheit und deren Anordnung am Träger eine besonders flache Bauart, insbesondere eine geringe Bauhöhe erreicht werden. Vorteilhafterweise weist die Schalteinheit eine Umhausung auf, welche einen für die Schaltkontakte vorgesehenen Raum umschließt und in liegender Position auf dem Träger aufliegt.
Der Träger weist zweckmäßigerweise zumindest eine Tragfläche auf, an welcher die Schalteinheit angeordnet ist. Die Schalteinheit ist insbesondere länglich ausgebildet und weist eine definierte Längsrichtung auf. Diese kann insbesondere einer Bewegungsrichtung entsprechen, in welcher bei einem Schaltvorgang eine relative, lineare Bewegung der Schaltkontakte zueinander erfolgt. Unter einer Anordnung der Schalteinheit "in liegender Position relativ zum Träger" soll insbesondere eine Anordnung verstanden werden, in welcher die Längsrichtung der Schalteinheit parallel zur Tragfläche ausgerichtet ist. Die Tragfläche kann aus Teilflächen bestehen, die einen teilweisen Kontakt mit der Schalteinheit herstellen. Es kann jedoch eine einfache Bauweise erreicht werden, wenn der Träger - z.B. in der Form einer Trägerplatte - eine zusammenhängende Tragfläche bildet, wobei die Schalteinheit vorzugsweise vollständig an der Tragfläche anliegt.
Die Schaltvorrichtung umfasst zweckmäßigerweise zumindest zwei Kontaktschnittstellen auf, durch welche eine elektrische Verbindung zur Versorgungsleitung bzw. zur Fahrzeugsantriebseinheit hergestellt werden kann, wobei die Schaltkontakte der Schalteinheit vorteilhafterweise dazu dienen, eine elektrische Verbindung zwischen den Kontaktschnittstellen herzustellen bzw. zu trennen. Die Kontaktschnittstellen sind vorzugsweise beide zum Führen der von der Versorgungsleitung geführten elektrischen Hochspannung vorgesehen, wobei eine Spannungsumwandlung zum Umwandeln der Hochspannung in eine niedrigere Spannung mittels einer Spannungsumwandlungseinheit erfolgt, z.B. mittels eines Transformators oder eines Spannungswandlers, die ein Bestandteil der Fahrzeugsantriebseinheit ist.

Unter einer "Hochspannung" soll insbesondere eine elektrische Spannung verstanden werden, die über die Versorgungsleitung von einem Netzbetreiber zur Verfügung gestellt wird. Die Hochspannung weist insbesondere einen Wert von zumindest 500 V auf. Ist das elektrisch angetriebene Fahrzeug als Schienenfahrzeug ausgebildet, kann die Hochspannung einen für den Eisenbahnbetrieb typischen Wert aufweisen, wie beispielsweise 1,5 kV, 3kV, 15 kV oder 25 kV. Die Hochspannung kann hierbei eine Gleichspannung oder eine Wechselspannung sein.

Die Gehäuseeinheit bildet einen von ihr umschlossenen Gehäuseraum, in welchem zumindest die Schalteinheit und die Antriebseinheit angeordnet sind. Die Gehäuseeinheit kann beispielsweise aus mehreren Gehäuseteilen bestehen, die aneinander angeflanscht sind, jedoch kann eine konstruktiv einfache Ausführung erreicht werden, wenn die Gehäuseeinheit ein Gehäuse aufweist, das einen zusammenhängenden Gehäuseraum zumindest für die Schalteinheit und die Antriebseinheit bildet.

Eine konstruktiv einfache Bauform kann außerdem erreicht werden, wenn der Träger eine Tragebene bildet, wobei die Schalteinheit und die Antriebseinheit oberhalb der Trageebene angeordnet sind. Vorzugsweise weist die Antriebseinheit eine Längsrichtung auf, die parallel zur Tragebene ausgerichtet ist. Der Begriff "oberhalb" bezieht sich auf die normale Richtung zur Tragebene.

Ferner wird vorgeschlagen, dass die Antriebseinheit - in einer senkrecht zur Längsrichtung der Schalteinheit und parallel zur Trageebene ausgerichteten Richtung betrachtet - zumindest teilweise seitlich neben der Schalteinheit angeordnet ist, wodurch eine besonders flache Bauweise erreicht werden kann, da eine Anordnung der Antriebseinheit und der Schalteinheit in einer gemeinsamen Ebene erzielbar ist. Unter einer Anordnung der Antriebseinheit "neben" der Schalteinheit soll insbesondere eine Anordnung verstanden werden, bei welcher die Schalteinheit von Bestandteilen der Antriebseinheit benachbart, bevorzugt direkt benachbart ist.

Vorzugsweise ist die Trageebene eine zusammenhängende Trageebene, die zum Tragen der Schalteinheit und der Antriebseinheit vorgesehen ist, wodurch Bauteile und Montageaufwand eingespart werden können.

In einer bevorzugten Ausbildung der Erfindung wird vorgeschlagen, dass die Gehäuseeinheit eine Trägerplatte aufweist, die die Trageebene bildet. Die Trägerplatte kann hierbei von einer Montageplatte der Gehäuseplatte gebildet sein, die im fertig montierten Zustand der Schaltvorrichtung gegenüber einer Deckelplatte angeordnet ist.

Ist die Antriebseinheit länglich ausgeformt, kann - senkrecht zur Längsrichtung der Schalteinheit - eine Bauraum sparende Anordnung erreicht werden, wenn die Längsrichtung der Schalteinheit und die Längsrichtung der Antriebseinheit parallel zueinander ausgerichtet sind.

Eine weitere Bauraumeinsparung kann ferner erzielt werden, wenn die Antriebseinheit und die Schalteinheit durch einen Antriebsstrang verbunden sind, wobei eine Koppeleinrichtung zum Koppeln der Antriebseinheit mit der Schalteinheit vorgesehen ist, welche eine Umlenkung des Antriebsstrangs, insbesondere um 180° bewirkt. Die Koppeleinrichtung ist besonders vorteilhaft in der Gehäuseeinheit angeordnet.

Vorzugsweise sind die Schalteinheit, die Antriebseinheit und die Koppeleinrichtung in einer gemeinsamen Ebene angeordnet.

Dies kann dadurch erreicht werden, dass der Träger eine Tragebene, insbesondere eine zusammenhängende Tragebene bildet, die die Schalteinheit, die Antriebseinheit und die Koppeleinrichtung trägt.

In einer besonders bevorzugten Ausbildung der Erfindung wird vorgeschlagen, dass die Gehäuseeinheit einen Gehäuseraum umschließt, in welchem die Schalteinheit und die Antriebseinheit angeordnet sind, wobei ein Teil des Gehäuseraums, der für die Anordnung der Schaltkontakte und die Anordnung von mit ihnen elektrisch verbundenen Komponenten vorgesehen ist, von dem übrigen Teil des Gehäuseraums durch eine elektrisch isolierende Abschirmung getrennt ist. Hierdurch kann ein besonders geringer Abstand zwischen der Schalteinheit und den von der Schalteinheit benachbarten Bauteilen erreicht werden, wodurch eine vorteilhafte kompakte Anordnung der Komponenten der Schaltvorrichtung innerhalb der Gehäuseeinheit erzielt werden kann. Weist die Schalteinheit eine Umhausung auf, die einen für die Schaltkontakte vorgesehenen Raum umschließt, wird in einer vorteilhaften Ausführung vorgeschlagen, dass die Umhausung die elektrisch isolierende Abschirmung umschließt. Durch die elektrisch isolierende Abschirmung weist die nach außen gerichtete Umhausungsoberfläche vorteilhaft ein elektrisches Potential auf, welches dem elektrischen Potential der Gehäuseeinheit entsprechen kann, wobei auf einen Luftabstand zwischen der Schalteinheit und diese direkt umgebenden Komponenten verzichtet werden kann.

Vorzugsweise weist die Schalteinheit einen Vakuumschalter auf.

Gemäß einer weiteren Ausgestaltung der Erfindung weist die Schaltvorrichtung einen Erdungstrenner auf, welcher in der Gehäuseeinheit angeordnet ist. Insbesondere wird vorgeschlagen, dass die Schalteinheit - in einer senkrecht zur Längsrichtung der Schalteinheit und parallel zur Trageebene ausgerichteten Richtung betrachtet - zwischen der Antriebseinheit und dem Erdungstrenner angeordnet ist.

Ferner wird ein Elektrofahrzeug vorgeschlagen, mit einem Stromabnehmer, einer Fahrzeugsantriebseinheit und einer mit dem Stromabnehmer und der Fahrzeugsantriebseinheit elektrisch verbundenen, erfindungsgemäßen Schaltvorrichtung.

Insbesondere ist die Schaltvorrichtung an einem Fahrzeugsdachelement befestigt, wobei die Schalteinheit und die Antriebseinheit der Schaltvorrichtung auf einer gemeinsamen Trageebene des Trägers liegend angeordnet sind, die relativ zum Boden horizontal ausgerichtet ist. Durch die flache Bauart, die mittels der vorgeschlagenen Schaltvorrichtung erreicht werden kann, können bedeutende Vorteile in Bezug auf die Aerodynamik im Fahrzeugsdachbereich erreicht werden. Dies ermöglicht eine höhere Flexibilität in der Platzierung der Schaltvorrichtung, die bei herkömmlichen Lösungen zur Einhaltung bestimmter Lichtraumprofilvorgaben eingeschränkt ist. Insbesondere kann eine Einschränkung auf eine mittige Anordnung der Schaltvorrichtung entfallen.

Dies ermöglicht ferner eine vorteilhafte Anordnung der Schaltvorrichtung am Fahrzeugsdachelement, welches - in vertikaler Richtung betrachtet - oberhalb eines Fahrzeugsinnenraums angeordnet ist, bei welcher zumindest die Antriebseinheit außerhalb des Fahrzeugsinnenraums angeordnet ist. Hierdurch kann vorteilhaft - gegenüber einer Lösung, in welcher die Antriebseinheit in einem aus dem Fahrzeugdach ausgesparten Durchbruch angeordnet ist - eine unerwünschte Schallübertragung in den Fahrzeugsinnenraum bei einem Schaltvorgang der Schaltvorrichtung verringert, insbesondere verhindert werden. Außerdem kann eine platzaufwendige Luftschallisolierung eingespart werden, die - um eine Beeinträchtigung weiterer Komponenten im Deckenbereich des Fahrzeugs, wie z.B. von Klimakanälen zu vermeiden, herkömmlicherweise einen erheblichen Montageaufwand und/oder ein erhöhtes Gewicht und Bauhöhe hervorruft. Ferner kann eine für einen herkömmlichen Dachdurchbruch notwendige Abdichtung entfallen.

Durch die Anordnung der Schalteinheit und der Antriebseinheit auf einer gemeinsamen, horizontalen Tragebene kann die Schaltvorrichtung bzw. ihre Gehäuseeinheit besonders einfach auf dem Fahrzeugsdachelemente liegend befestigt werden, wobei die Gehäuseeinheit auf dem Fahrzeugsdachelement vollständig anliegt.

Ein Ausführungsbeispiel der Erfindung wird anhand der Zeichnungen erläutert. Es zeigen:
- Figur 1:: ein Schienenfahrzeug in einer schematischen Seitenansicht, mit einem Stromabnehmer, einer Schaltvorrichtung und einer Fahrzeugsantriebseinheit,
- Figur 2:: eine perspektivische Detailansicht der Schaltvorrichtung aus Figur 1,
- Figur 3:: eine Ansicht der Schaltvorrichtung aus Figur 2 von oben und
- Figur 4:: eine Frontansicht der auf einem Fahrzeugsdachelement liegenden Schaltvorrichtung.

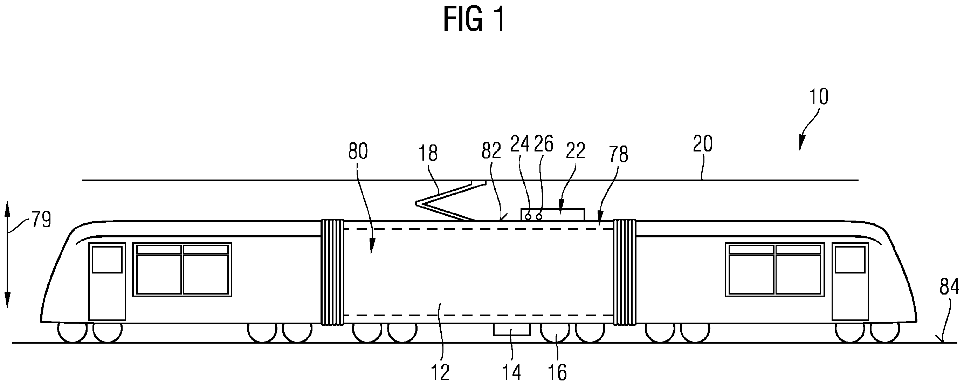

Figur 1 zeigt ein als Schienenfahrzeug ausgebildetes, elektrisch angetriebenes Fahrzeug 10 in einer stark schematisierten Seitenansicht. Im betrachteten Ausführungsbeispiel ist das Fahrzeug 10 als Triebfahrzeug ausgebildet, welches aus mehreren Fahrzeugseinheiten 12 besteht. Zumindest eine Fahrzeugseinheit 12 ist mit einer Fahrzeugsantriebseinheit 14 versehen, die zum Antreiben zumindest einer Triebachse 16 des Fahrzeugs 10 dient. Die in der Figur gezeigte Anordnung der zumindest einen Triebachse 16 und der ihr zugeordneten Fahrzeugsantriebseinheit 14 im Fahrzeug 10 sowie die Anzahl der Fahrzeugseinheiten 12 sind beispielhaft. Die Darstellung der Fahrzeugsantriebseinheit 14 ist ebenfalls stark schematisch, wobei einzelne Komponenten der Fahrzeugsantriebseinheit 14 an unterschiedlichen Stellen im Fahrzeug 10 verteilt sein können.

In einer alternativen Ausführung kann das Fahrzeug 10 als elektrische Lokomotive ausgebildet sein.

Zur Versorgung der Fahrzeugsantriebseinheit 14 mit elektrischer Energie weist das Fahrzeug 10 einen Stromabnehmer 18 auf, welcher in einem Betriebszustand des Fahrzeugs 10 mit einer Oberleitung in elektrischem Kontakt steht. Die Oberleitung entspricht bekannterweise einer elektrischen, eine Hochspannung führenden Versorgungsleitung 20, welche die Fahrzeugsantriebseinheit 14 mit elektrischer Energie versorgt. Alternativ kann die Versorgungsleitung 20 als Stromschiene ausgebildet sein, die entlang einer gefahrenen Strecke verläuft. Die Hochspannung kann als Gleichspannung oder Wechselspannung ausgebildet sein und kann die für einen Eisenbahnbetrieb üblichen Werte von 1,5 kV, 3 kV, 15 kV oder 25 kV aufweisen.

Das Fahrzeug 10 weist ferner eine Schaltvorrichtung 22 auf, die dazu dient, die Fahrzeugsantriebseinheit 14 - bei hergestelltem elektrischem Kontakt des Stromabnehmers 18 mit der Versorgungsleitung 20 - mit der Versorgungsleitung 20 Spannung führend zu verbinden bzw. von dieser Versorgungsleitung 20 elektrisch zu trennen. Hierzu weist die Schaltvorrichtung 22 Kontaktschnittstellen 24, 26 auf, die mit dem Stromabnehmer 18 bzw. mit der Fahrzeugsantriebseinheit 14 elektrisch verbunden sind. Beide Kontaktschnittstellen 24, 26 führen die von der Versorgungsleitung 20 bezogenen Hochspannung. Diese wird in einer nicht näher dargestellten Spannungsumwandlungseinheit der Fahrzeugsantriebseinheit 14 in eine niedrigere elektrische Spannung umgewandelt.

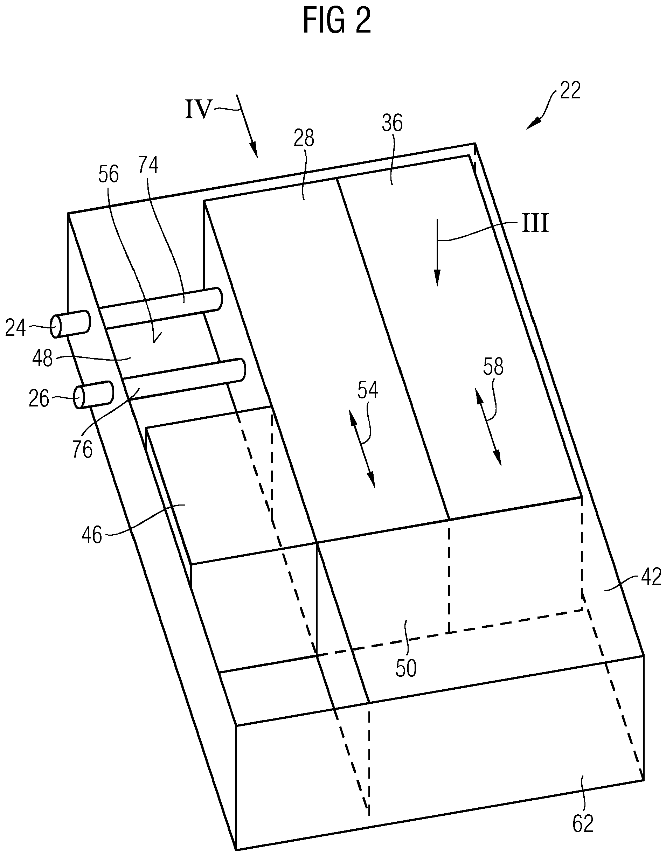

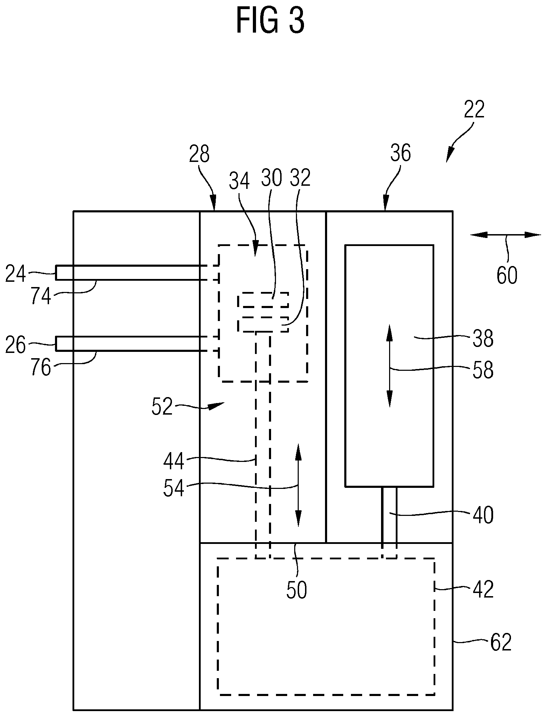

Der Aufbau der Schaltvorrichtung 22 wird anhand der Figuren 2 und 3 näher erläutert. Figur 2 zeigt die Schaltvorrichtung 22 in einer schematischen perspektivischen Ansicht, während Figur 3 die Anordnung aus Figur 2 in einer Ansicht von oben gemäß dem Pfeil III in Figur 2 darstellt.

Die Schaltvorrichtung 22 weist eine Schalteinheit 28 auf, die zur Herstellung bzw. zur Trennung einer elektrischen Verbindung zwischen den die Hochspannung führenden Schnittstellen 24, 26 vorgesehen ist. Hierzu weist die Schalteinheit 28 zwei Schaltkontakte 30, 32 auf, wobei eine Relativbewegung der Schaltkontakte 30, 32 zueinander zwischen einer Trennstellung und einer Kontaktstellung möglich ist (Figur 3). Im betrachteten Ausführungsbeispiel kann der Schaltkontakt 32 zu einer Bewegung relativ zum Schaltkontakt 30 angetrieben werden, wobei er ausgehend von einer, in Figur 3 gezeigten Trennposition in eine Kontaktposition bewegt werden kann, in welcher er am Schaltkontakt 30 anliegt. Jeder der Schaltkontakte 30, 32 ist jeweils mit einer unterschiedlichen Schnittstelle 24, 26 elektrisch verbunden. Die Schaltkontakte 30, 32 sind in einem abgeschlossenen Raum 34 angeordnet, in welchem Vakuum hergestellt ist.

Zum Antreiben der relativen Bewegung der Schaltkontakte 30, 32 zueinander - in diesem Beispiel insbesondere zum Antreiben des Schaltkontakts 32 - weist die Schaltvorrichtung 22 eine Antriebseinheit 36 auf, die einen Antriebsteil 38 und zumindest ein Übertragungsmittel 40 umfasst. Das Übertragungsmittel 40 kann von dem Antriebsteil pneumatisch und/oder elektrisch betätigt werden.

Die Schaltvorrichtung 22 weist ferner eine Koppeleinrichtung 42 auf, die dazu dient, die Antriebseinheit 36 mit der Schalteinheit 28 zu koppeln, so dass diese durch einen Antriebsstrang miteinander verbunden sind. Die Koppeleinrichtung 42 koppelt insbesondere das Übertragungsmittel 40 der Antriebseinheit 36 mechanisch mit einem Übertragungsmittel 44 der Schalteinheit 28, das starr mit dem Schaltkontakt 32 verbunden ist, so dass eine Bewegung des Übertragungsmittels 40 eine Bewegung des Übertragungsmittels 44 bewirkt. Mittels der Koppeleinrichtung 42 erfolgt eine Umlenkung des Antriebsstrangs um 180°, wobei die Bewegungsrichtungen der Übertragungsmittel 40 und 44 entgegengesetzt sind.

Als weitere Komponente der Schaltvorrichtung 22 ist in Figur 2 ein Erdungstrenner 46 dargestellt, der dazu dient, eine elektrische Verbindung der Schaltvorrichtung 22 mit dem Erdpotential herzustellen bzw. zu trennen.

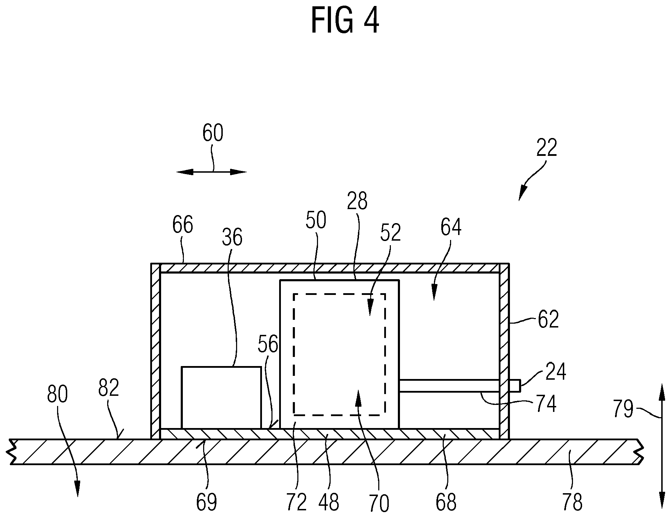

Die in den Figuren 2 und 3 gezeigte Anordnung von Schalvorrichtungskomponenten ist in Figur 4 in einer Frontansicht gemäß dem Pfeil IV dargestellt.

In Figur 4 sind die Antriebseinheit 36, die Schalteinheit 28 und die Schnittstelle 24 zu erkennen. Die Schaltvorrichtung 22 weist einen Träger 48 auf, der zum Tragen der Schalteinheit 28 dient. Wie auch den Figuren 2 und 3 zu entnehmen ist, weist die Schalteinheit 28 eine Umhausung 50 auf, welche einen Raum 52 umschließt. Dieser Raum 52, in welchem zumindest die Schaltkontakte 30, 32 angeordnet sind, ist gegenüber weiteren Komponenten der Schaltvorrichtung 22 - wie insbesondere gegenüber der Antriebseinheit 36, der Koppeleinrichtung 42 und dem Träger 48 - elektrisch abgeschirmt. Die nach außen gerichtete Oberfläche der Umhausung 50 weist im Betrieb der Schaltvorrichtung 22 ein elektrisches Potential gegenüber den genannten Komponenten auf, das eine Anbringung der Umhausung 50 an dem Träger 48 zulässt.

Wie ebenfalls in den Figuren 2 und 3 zu sehen ist, weist die Schalteinheit 28 bzw. deren Umhausung 50 eine längliche Form auf, wobei die Längsrichtung 54 der Schalteinheit 28 dargestellt ist. Im betrachteten Ausführungsbeispiel entspricht die Längsrichtung 54 der Bewegungsrichtung, mit welcher eine Relativbewegung der Schaltkontakte 30, 32 zueinander zwischen der Trennposition und der Kontaktposition durchgeführt wird. Mit Bezug auf die Längsrichtung 54 der Schalteinheit 28 ist diese bzw. deren Umhausung 50 relativ zum Träger 48 in liegender Position auf diesem angeordnet.

Der Träger 48 ist als Trägerplatte ausgebildet, die eine Tragebene 56 bildet. In Bezug auf die normale Richtung zur Tragebene 56 sind die Schalteinheit 28 und die Antriebseinheit 36 oberhalb der Tragebene 56 angeordnet. Die Antriebseinheit 36 erstreckt sich in einer Richtung bzw. weist (nicht näher gezeigte) Komponenten auf, die in dieser Richtung hintereinander angeordnet sind, welche als Längsrichtung 58 der Antriebseinheit 36 bezeichnet wird. Die Längsrichtung 58 ist parallel zur Tragebene 56 und zur Längsrichtung 54 der Schalteinheit 28 ausgerichtet. Die Antriebseinheit 36 ist seitlich neben der Schalteinheit 28 angeordnet. Hierbei grenzen die Antriebseinheit 36 bildende Antriebskomponenten an der Schalteinheit 28 bzw. an deren Umhausung 50 weitestgehend an. In einer Richtung 60 betrachtet, die parallel zur Tragebene 56 und senkrecht zur Längsrichtung 54 der Schalteinheit 28 ausgerichtet ist, besteht eine Überlappung zwischen der Antriebseinheit 36 und der Schalteinheit 28.

Die vom Träger 48 gebildete Tragebene 56 ist eine zusammenhängende Ebene bzw. eine zusammenhängende Tragfläche, die zum Anbringen der Schalteinheit 28 und der Antriebseinheit 36 dient. Anders ausgedrückt sind die Schalteinheit 28 und die ihr zugeordnete Antriebseinheit 36 auf dem gemeinsamen Träger 48 bzw. auf der gemeinsamen Tragebene 56 montiert. Zusätzlich dient der Träger 48 bzw. die Tragebene 56 zur Montage der Koppeleinrichtung 42 und des Erdungstrenners 46. Hierdurch wird eine Anordnung erreicht, in welcher zumindest die Antriebseinheit 36 und die Schalteinheit 28 in einer Ebene angeordnet sind. Zusätzlich sind die Koppeleinrichtung 42 und der Erdungstrenner 46 ebenfalls in dieser Ebene angeordnet, wodurch eine besonders flache Bauart erreichbar ist.

Wie ferner den Figuren 2 und 3 zu entnehmen ist, weist die Schaltvorrichtung 22 eine Gehäuseeinheit 62 auf, die zur Aufnahme zumindest der Schalteinheit 28 und der Antriebseinheit 36 dient. Insbesondere umschließt die Gehäuseeinheit 62 einen Gehäuseraum 64, in welchem die Schalteinheit 28 und die Antriebseinheit 36 angeordnet sind. Im betrachteten Ausführungsbeispiel ist der Gehäuseraum 64 zusammenhängend. Zusätzlich zur Schalteinheit 28 und zur Antriebseinheit 36 sind die Koppeleinrichtung 42 und der Erdungstrenner 46 im Gehäuseraum 64 angeordnet. In den Figuren 2 und 3 ist die Schaltvorrichtung 22 gezeigt, bei welcher ein Deckelteil 66 der Gehäuseeinheit 62 (siehe Figur 4) der Übersichtlichkeit halber nicht dargestellt ist.

Die Gehäuseeinheit 62 weist - gegenüber dem Deckelteil 66 angeordnet - einen Bodenteil auf, der in der Form einer Trägerplatte 68 ausgebildet ist und dem Träger 48 entspricht. Die Trägerplatte 68 bildet daher die Tragebene 56. Die Trägerplatte 68 bildet eine Gehäuseaußenfläche 69, die parallel zur Tragebene 56 ausgerichtet ist.

Der Raum 52, der - wie oben erläutert - von der Umhausung 50 umschlossen ist, entspricht einem Teil 70 des Gehäuseraums 64, der für die Schaltkontakte 30, 32 und für mit ihnen elektrisch verbundenen Komponenten vorgesehen ist. Der Raum 52 bzw. der Teil 70 des Gehäuseraums 64 ist vom übrigen Teil des Gehäuseraums 64 mittels einer elektrisch isolierenden Abschirmung 72 getrennt. Dieser Teil 70 ist mit den Schnittstellen 24, 26 mittels elektrischer Verbindungen 74, 76 verbunden, die ebenfalls gegenüber ihrer direkten Umgebung elektrisch abgeschirmt sind.

Die Schalteinheit 28 ist im Gehäuseraum 64 in Bezug auf die Richtung 60 bzw. die Breite der Gehäuseeinheit 62 mittig angeordnet. Hierbei ist sie in Richtung 60 betrachtet zwischen der Antriebseinheit 36 und dem Erdungstrenner 46 angeordnet.

In Figur 4 ist ferner ein Fahrzeugsdachelement 78 dargestellt, welches einen Fahrzeugsinnenraum 80 deckt(siehe auch Figur 1). In Bezug auf die vertikale Richtung 79 ist das Fahrzeugsdachelement 78 oberhalb des Fahrzeugsinnenraums 80 angeordnet. Das Fahrzeugsdachelement 78 bildet hierbei eine nach oben gerichtete Außenfläche des Fahrzeugs 10. Die Schaltvorrichtung 22 ist auf dem Fahrzeugsdachelement 78, und zwar auf dieser Außenfläche liegend befestigt. Hierbei ist die Längsrichtung der Schaltvorrichtung 22 bzw. die Längsrichtung der Gehäuseeinheit 62, die der Längsrichtung 54 der Schalteinheit 28 entspricht, parallel zu einer vom Fahrzeugsdachelement 78 gebildeten Dachebene 82 ausgerichtet. Die Tragebene 56 des für die Schalteinheit 28 und die Antriebseinheit 36 vorgesehenen Trägers 48 ist hiermit parallel zur Dachebene 82 und zum Boden 84 und daher horizontal ausgerichtet. Die Gehäuseaußenfläche 69 liegt an der Dachebene 82 an. Sowohl die Schalteinheit 28 als auch die Antriebseinheit 36 der Schaltvorrichtung 22 sind außerhalb des Fahrzeugsinnenraums 80 angeordnet.

Die Schaltvorrichtung 22 mit ihrer Gehäuseeinheit 62 und ihren im Gehäuseraum 64 angeordneten Komponenten wird vor einer Montage am oder im Fahrzeug 10 als Baumodul vorgefertigt. Nach dieser Montage werden die Schnittstellen 24, 26, welche aus dem Gehäuseraum 64 herausragen, mit dem Stromabnehmer bzw. mit der Fahrzeugsantriebseinheit 14 verbunden.

Die Schaltstellung des Erdungstrenners 46 kann mittels einer mechanisch betätigbaren Anzeigeeinheit angezeigt werden, so dass diese Schaltstellung von außen eingesehen werden kann. Zum Beispiel kann eine Stange, die von innen an einen Balg drückt und dadurch die Schaltstellung nach außen zeigt, ohne, dass die Gehäuseeinheit geöffnet werden muss, zur Anwendung kommen.

Mittels des Erdungstrenners 46 kann insbesondere eine Verbindung der Gehäuseeinheit 62 mit dem Erdpotential hergestellt werden, so dass herkömmliche Dachrelinge oder Hochspannungsgerüste für den erforderlichen Berührschutz entfallen können.

Die Schaltvorrichtung 22 kann an weiteren Einbauorten im Fahrzeug 10 montiert werden, wie z.B. in Dachvouten, im Unterflurbereich oder in einem Technikraum.

## Patentansprüche

1. Schaltvorrichtung für ein elektrisch angetriebenes Fahrzeug (10), insbesondere Schienenfahrzeug, mit einer Schalteinheit (28), die zum Verbinden und zum Trennen einer Fahrzeugsantriebseinheit (14) mit bzw. von einer elektrischen, einer Hochspannung führenden Versorgungsleitung (20) vorgesehen ist und zumindest zwei Schaltkontakte (30, 32) aufweist, einer Antriebseinheit (36), die zum Antreiben einer relativen Bewegung der Schaltkontakte (30, 32) zueinander vorgesehen ist, **dadurch gekennzeichnet, dass** eine Gehäuseeinheit (62) zumindest zur Aufnahme der Schalteinheit (28) und der Antriebseinheit (36) vorgesehen ist, wobei die Gehäuseeinheit (62) einen Träger (48) zum Tragen zumindest der Schalteinheit (28) umfasst, und wobei die Schalteinheit (28) relativ zum Träger (48) in liegender Position an diesem angeordnet ist.

2. Schaltvorrichtung nach Anspruch 1,
**dadurch gekennzeichnet, dass**
der Träger (48) eine Tragebene (56) bildet, wobei die Schalteinheit (28) und die Antriebseinheit (36) oberhalb der Trageebene (56) angeordnet sind.

3. Schaltvorrichtung nach Anspruch 2,
**dadurch gekennzeichnet, dass**
die Antriebseinheit (36) - in einer senkrecht zur Längsrichtung (54) der Schalteinheit (28) und parallel zur Trageebene (56) ausgerichteten Richtung (60) betrachtet - zumindest teilweise seitlich neben der Schalteinheit (28) angeordnet ist.

4. Schaltvorrichtung nach Anspruch 2 oder 3,
**dadurch gekennzeichnet, dass**
die Trageebene (56) eine zusammenhängende Trageebene ist, die zum Tragen der Schalteinheit (28) und der Antriebseinheit (36) vorgesehen ist.

5. Schaltvorrichtung nach einem der Ansprüche 2 bis 4,
**dadurch gekennzeichnet, dass**
die Gehäuseeinheit (62) eine Trägerplatte (68) aufweist, die die Trageebene (56) bildet.

6. Schaltvorrichtung nach einem der vorhergehenden Ansprüche,
**dadurch gekennzeichnet, dass**
die Antriebseinheit (36) länglich ausgeformt ist, wobei die Längsrichtung (54) der Schalteinheit (28) und die Längsrichtung (58) der Antriebseinheit (36) parallel zueinander ausgerichtet sind.

7. Schaltvorrichtung nach einem der vorhergehenden Ansprüche, **dadurch gekennzeichnet, dass**
die Antriebseinheit (36) und die Schalteinheit (28) durch einen Antriebsstrang verbunden sind, wobei eine Koppeleinrichtung (42) zum Koppeln der Antriebseinheit (36) mit der Schalteinheit (28) vorgesehen ist, welche eine Umlenkung des Antriebsstrangs, insbesondere um 180° bewirkt.

8. Schaltvorrichtung nach einem der vorhergehenden Ansprüche,
**dadurch gekennzeichnet, dass**
die Gehäuseeinheit (62) einen Gehäuseraum (64) umschließt, in welchem die Schalteinheit (28) und die Antriebseinheit (36) angeordnet sind, wobei ein Teil (70) des Gehäuseraums (64), der für die Anordnung der Schaltkontakte (30, 32) und die Anordnung von mit ihnen elektrisch verbundenen Komponenten vorgesehen ist, von dem übrigen Teil des Gehäuseraums (64) durch eine elektrisch isolierende Abschirmung (72) getrennt ist.

9. Schaltvorrichtung nach einem der vorhergehenden Ansprüche,
**dadurch gekennzeichnet, dass**
die Schalteinheit (28) einen Vakuumschalter aufweist.

10. Schaltvorrichtung nach einem der vorhergehenden Ansprüche,
**gekennzeichnet durch**
einen Erdungstrenner (46), welcher in der Gehäuseeinheit (62) angeordnet ist.

11. Schaltvorrichtung nach Anspruch 3 und 10,
**dadurch gekennzeichnet, dass**
die Schalteinheit (28) - in einer senkrecht zur Längsrichtung (54) der Schalteinheit (28) und parallel zur Trageebene (56) ausgerichteten Richtung (60) betrachtet - zwischen der Antriebseinheit (36) und dem Erdungstrenner (46) angeordnet ist.

12. Elektrofahrzeug, insbesondere elektrisch angetriebenes Schienenfahrzeug, mit einem Stromabnehmer (18), einer Fahrzeugsantriebseinheit (14) und einer mit dem Stromabnehmer (18) und der Fahrzeugsantriebseinheit (14) elektrisch verbundenen Schaltvorrichtung (22) nach einem der vorhergehenden Ansprüche.

13. Elektrofahrzeug nach Anspruch 12,
**dadurch gekennzeichnet, dass**
die Schaltvorrichtung (22) an einem Fahrzeugsdachelement (78) befestigt ist, wobei die Schalteinheit (28) und die Antriebseinheit (36) der Schaltvorrichtung (22) auf einer gemeinsamen Trageebene (56) des Trägers (48) liegend angeordnet sind, die relativ zum Boden (84) horizontal ausgerichtet ist.

14. Elektrofahrzeug nach Anspruch 13,
**dadurch gekennzeichnet, dass**
das Fahrzeugsdachelement (78) oberhalb eines Fahrzeugsinnenraums (80) angeordnet ist und die Schaltvorrichtung (22) derart am Fahrzeugsdachelement (78) befestigt ist, dass zumindest die Antriebseinheit (36) außerhalb des Fahrzeugsinnenraums (80) angeordnet ist.

15. Elektrofahrzeug nach Anspruch 14,
**dadurch gekennzeichnet, dass**
die Schaltvorrichtung (22) auf dem Fahrzeugsdachelement (78) liegend befestigt ist.

## Claims

1. Switching device for an electrically driven vehicle (10), in particular a rail-borne vehicle, having a switching unit (28) that is provided for connecting and disconnecting a vehicle drive unit (14) to and accordingly from an electrical supply line (20) that is conveying a high voltage and said switching unit comprises at least two switch contacts (30, 32), having a drive unit (36) that is provided for driving a relative movement of the switch contacts (30, 32) with respect to one another, **characterized in that** a housing unit (62) is provided at least for receiving the switching unit (28) and the drive unit (36), wherein the housing unit (62) comprises a carrier (48) for supporting at least the switching unit (28),
and wherein the switching unit (28) is arranged relative to the carrier (48) in a lying position on said carrier.

2. Switching device according to Claim 1,
**characterized in that**
the carrier (48) forms a carrier plane (56), wherein the switching unit (28) and the drive unit (36) are arranged above the carrier plane (56).

3. Switching device according to Claim 2,
**characterized in that**
the drive unit (36) - when viewed in a direction (60) that is aligned perpendicularly to the longitudinal direction (54) of the switching unit (28) and parallel to the carrier plane (56) - is arranged at least in part at the side adjacent to the switching unit (28).

4. Switching device according to Claim 2 or 3,
**characterized in that**
the carrier plane (56) is a continuous carrier plane that is provided for supporting the switching unit (28) and the drive unit (36).

5. Switching device according to any one of Claims 2 to 4,
**characterized in that**
the housing unit (62) comprises a carrier plate (68) that forms the carrier plane (56).

6. Switching device according to any one of the preceding claims,
**characterized in that**
the drive unit (36) is formed in an elongated manner, wherein the longitudinal direction (54) of the switching unit (28) and the longitudinal direction (58) of the drive unit (36) are aligned parallel to one another.

7. Switching device according to any one of the preceding claims,
**characterized in that**
the drive unit (36) and the switching unit (28) are connected by means of a power transmission, wherein a coupling device (42) is provided for coupling the drive unit (36) to the switching unit (28), said coupling unit causing a deflection of the power transmission in particular by 180°.

8. Switching device according to any one of the preceding claims,
**characterized in that**
the housing unit (62) encompasses a housing chamber (64) in which the switching unit (28) and the drive unit (36) are arranged, wherein a part (70) of the housing chamber (64) that is provided for the arrangement of the switch contacts (30, 32) and the arrangement of components that are electrically connected to said switch contacts is separated from the remaining part of the housing chamber (64) by means of an electrically insulating shield (72).

9. Switching device according to any one of the preceding claims,
**characterized in that**
the switching unit (28) comprises a vacuum switch.

10. Switching device according to any one of the preceding claims,
**characterized by**
an earth disconnector (46) that is arranged in the housing unit (62).

11. Switching device according to Claims 3 and 10,
**characterized in that**
the switching unit (28) - when viewed in a direction (60) that is aligned perpendicularly to the longitudinal direction (54) of the switching unit (28) and parallel to the carrier plane (56) - is arranged between the drive unit (36) and the earth disconnector (46).

12. Electric vehicle, in particular an electrically driven rail-borne vehicle, having a current collector (18), a vehicle drive unit (14) and a switching device (22) that is in accordance with any one of the preceding claims and is electrically connected to the current collector (18) and the vehicle drive unit (14).

13. Electric vehicle according to Claim 12,
**characterized in that**
the switching device (22) is fastened to a vehicle roof element (78), wherein the switching unit (28) and the drive unit (36) of the switching device (22) are arranged in a lying manner on a common carrier plane (56) of the carrier (48) and said carrier plane is arranged in a horizontal manner relative to the ground (84).

14. Electric vehicle according to Claim 13,
**characterized in that**
the vehicle roof element (78) is arranged above a vehicle inner compartment (80) and the switching device (22) is fastened to the vehicle roof element (78) in such a manner that at least the drive unit (36) is arranged outside the vehicle inner compartment (80).

15. Electric vehicle according to Claim 14,
**characterized in that**
the switching device (22) is fastened in a lying position on the vehicle roof element (78).

## Revendications

1. Dispositif de commutation pour un véhicule (10) à propulsion électrique, en particulier un véhicule ferroviaire, avec une unité de commutation (28) qui est prévue en vue du raccordement et de la séparation d'une unité de propulsion pour véhicule (14) avec, relativement par une ligne d'alimentation (20) électrique à haute tension et qui présente tout au moins deux contacts de commutation (30, 32), ainsi qu'avec une unité d'entraînement (36) qui est prévue en vue de l'entraînement d'un mouvement relatif des contacts de commutation (30, 32) les uns par rapport aux autres,
**caractérisé en ce que**
une unité de boîtier (62) est prévue tout au moins en vue du logement de l'unité de commutation (28) et de l'unité d'entraînement (36), l'unité de boîtier (62) comprenant un support (48) destiné tout au moins au support de l'unité de commutation (28), et l'unité de commutation (28) étant disposée par rapport au support (48) dans une position couchée sur celui-ci.

2. Dispositif de commutation selon la revendication 1,
**caractérisé en ce que**
le support (48) forme un plan de support (56), dans lequel l'unité de commutation (28) et l'unité d'entraînement (36) sont disposées au-dessus du plan de support (56).

3. Dispositif de commutation selon la revendication 2,
**caractérisé en ce que**
l'unité d'entraînement (36) est disposée, tout au moins en partie, latéralement à côté de l'unité de commutation (28), considérée dans une direction (60) orientée à la perpendiculaire de la direction longitudinale (54) de l'unité de commutation (28) et parallèlement au plan de support (56).

4. Dispositif de commutation selon la revendication 2 ou 3,
**caractérisé en ce que**
le plan de support (56) est un plan de support connexe qui est prévu en vue du support de l'unité de commutation (28) et de l'unité d'entraînement (36).

5. Dispositif de commutation selon l'une des revendications 2 à 4,
**caractérisé en ce que**
l'unité de boîtier (62) présente une plaque de support (68) qui forme le plan de support (56).

6. Dispositif de commutation selon l'une des revendications précédentes,
**caractérisé en ce que**
l'unité d'entraînement (36) est moulée dans une forme oblongue, la direction longitudinale (54) de l'unité de commutation (28) et la direction longitudinale (58) de l'unité d'entraînement (36) étant orientées parallèlement l'une par rapport à l'autre.

7. Dispositif de commutation selon l'une des revendications précédentes,
**caractérisé en ce que**
l'unité d'entraînement (36) et l'unité de commutation (28) sont raccordées par l'intermédiaire d'un groupe motopropulseur, un mécanisme de couplage (42) destiné au couplage de l'unité d'entraînement (36) étant prévu avec l'unité de commutation (28), laquelle provoque un changement de direction du groupe motopropulseur, en particulier de 180°.

8. Dispositif de commutation selon l'une des revendications précédentes,
**caractérisé en ce que**
l'unité de boîtier (62) entoure une chambre de boîtier (64), dans laquelle sont disposées l'unité de commutation (28) et l'unité d'entraînement (36), une partie (70) de la chambre de boîtier (64), laquelle est prévue pour la disposition des contacts de commutation (30, 32) et pour la disposition des composants électriques qui y sont raccordés, étant séparée de la partie restante de la chambre de boîtier (64) par un blindage (72) qui est électriquement isolant.

9. Dispositif de commutation selon l'une des revendications précédentes,
**caractérisé en ce que**
l'unité de commutation (28) présente un commutateur à vide.

10. Dispositif de commutation selon l'une des revendications précédentes,
**caractérisé par**
un sectionneur de mise à la terre (46), lequel est disposé dans l'unité de boîtier (62).

11. Dispositif de commutation selon la revendication 3 et 10,
**caractérisé en ce que**
l'unité de commutation (28) est disposée entre l'unité d'entraînement (36) et le sectionneur de mise à la terre (46), considérée dans une direction (60) orientée à la perpendiculaire de la direction longitudinale (54) de l'unité de commutation (28) et parallèlement au plan de support (56).

12. Véhicule ferroviaire, en particulier véhicule ferroviaire à propulsion électrique, avec un collecteur de courant (18), une unité de propulsion pour véhicule (14) et un dispositif de commutation (22) selon l'une des revendications précédentes, lequel dispositif de commutation (22) est raccordé électriquement au collecteur de courant (18) et à l'unité de propulsion pour véhicule (14).

13. Véhicule ferroviaire selon la revendication 12,
**caractérisé en ce que**
le dispositif de commutation (22) est fixé à un élément de toiture de véhicule (78), l'unité de commutation (28) et l'unité d'entraînement (36) du dispositif de commutation (22) étant disposées de manière couchée sur un plan de support (56) commun du support (48), lequel plan de support est orienté de manière horizontale par rapport au sol (84).

14. Véhicule ferroviaire selon la revendication 13,
**caractérisé en ce que**
l'élément de toiture de véhicule (78) est disposé au-dessus d'un compartiment intérieur de véhicule (80) et le dispositif de commutation (22) est fixé à l'élément de toiture de véhicule (78) de telle sorte que tout au moins l'unité d'entraînement (36) est disposée à l'extérieur du compartiment intérieur de véhicule (80).

15. Véhicule ferroviaire selon la revendication 14,
**caractérisé en ce que**
le dispositif de commutation (22) est fixé de manière couchée sur l'élément de toiture de véhicule (78).
